# FASCICULE DE BREVET EUROPEEN

(11) **EP 3 361 285 B1**
(45) Date de publication et mention de la délivrance du brevet: **25.12.2019**
(21) Numéro de dépôt: 18155045.0
(22) Date de dépôt: 05.02.2018
(51) Int. Cl.: G01S 19/21

(54) **SYSTÈME DE DÉTECTION DE BROUILLEURS GNSS PERSONNELS**
SYSTEM ZUR ERKENNUNG VON PERSÖNLICHEN GNSS-STÖRSENDERN
SYSTEM FOR DETECTING PERSONAL GNSS JAMMERS

(30) Priorité: 14.02.2017 FR 1700161
(43) Date de publication de la demande: 15.08.2018
(73) Titulaire: Thales, 92400 Courbevoie (FR)
(72) Inventeur: REVOL, Marc, 26120 UPIE (FR); BLETE, Jean-Guy, 26000 VALENCE (FR)
(74) Mandataire: Hammes, Pierre

(56) Documents cités:
- US-A1- 2011 148 712
- US-A1- 2015 264 239
- US-A1- 2016 323 048

## Description

L'invention concerne le domaine des systèmes de détection de brouilleurs GNSS, autrement dit des systèmes qui ont pour but de détecter l'émission d'un signal de brouillage ayant pour objectif de brouiller la réception de signaux de radionavigation par satellite (signaux GNSS).

Plus précisément, l'invention concerne la détection des brouilleurs GNSS personnels utilisés par les automobilistes et chauffeurs routiers afin d'inhiber la géo-localisation de leur véhicule. En effet, certaines professions, par exemple les chauffeurs routiers ou les taxis ou véhicules de transport avec chauffeur nécessitent d'installer un dispositif à bord du véhicule qui géo-localise le véhicule à partir de signaux GNSS reçus puis renvoie la position du véhicule vers un serveur distant. Bien que la géo-localisation d'un véhicule soit nécessaire pendant les heures de travail, certains chauffeurs utilisent des brouilleurs personnels de signaux GNSS pour inhiber la géo-localisation de leur véhicule en dehors des heures de travail.

Un brouilleur de signaux GNSS émet un signal qui vient perturber les signaux GNSS émis par des satellites et rend ainsi impossible leur exploitation par un récepteur GNSS et donc le calcul d'une position.

Un problème existe lorsqu'un brouilleur GNSS personnel est utilisé par un chauffeur à proximité d'un lieu sensible, tel qu'une gare ou un aéroport. L'utilisation de ce type de brouilleur est susceptible de perturber le fonctionnement de dispositifs de localisation utilisés dans les infrastructures de ces lieux sensibles, lorsqu'ils sont traversés par ou situés à proximité des voies de passage de véhicules utilisant de tels brouilleurs.

Par ailleurs, les brouilleurs personnels peuvent également interférer sur les stations différentielles GBAS (Ground Based Augmentation System) qui sont disposées au sol pour assister les systèmes GNSS et améliorer leur précision.

Bien qu'interdits d'utilisation, ces sources de brouillage sont très fréquentes et peuvent constituer un danger, qu'il convient de réduire, non seulement par le biais de réglementations, mais aussi par des dispositifs de détection et de localisation dédiés.

En outre, ce type de problème peut devenir crucial à résoudre à l'avenir dans l'optique d'un déploiement à grande échelle de voitures autonomes.

Une solution au problème précité consiste à intégrer, dans tous les récepteurs GNSS pour application routière, des traitements d'anti-brouillage ou de détection de présence de brouilleurs, cependant une telle solution semble inadaptée du fait de l'impact significatif en complexité de mise en œuvre pour des récepteurs portatifs.

Le document US2015264239 A1 décrit un système GNSS pour la détection de signaux de brouilleurs.

L'invention est définie par les revendications. L'invention propose de coupler les bornes radar de surveillance de la vitesse des véhicules, avec des dispositifs de détection de brouilleurs GNSS afin d'identifier les contrevenants.

La solution proposée présente l'avantage d'exploiter les infrastructures existantes de radars automobiles afin d'y intégrer des systèmes de détection de brouillage afin d'identifier les véhicules faisant usage de brouilleurs personnels, de la même façon qu'on identifie les véhicules en excès de vitesse.

L'invention a pour objet un système de détection de brouilleurs de signaux de radionavigation par satellite, destiné à être positionné au bord d'une route, le système comprenant :
- un premier dispositif pour recevoir un signal de radionavigation par satellite,
- un deuxième dispositif configuré pour mesurer au moins une caractéristique d'un signal de radionavigation par satellite reçu et détecter, à partir de ladite au moins une caractéristique, une perturbation dudit signal de radionavigation par satellite par un signal de brouillage,
- un troisième dispositif de déclenchement d'une prise de vue de la route si ledit signal de radionavigation par satellite est perturbé par un signal de brouillage, le premier dispositif étant configuré pour recevoir, via une liaison radio, une séquence d'un signal de radionavigation par satellite reçu par un véhicule et retransmise par ledit véhicule vers le système via la liaison radio.

Selon un aspect particulier de l'invention, la séquence d'un signal de radionavigation par satellite est prise en sortie d'antenne d'un récepteur de radionavigation par satellite embarqué dans le véhicule.

Selon un aspect particulier de l'invention, le premier dispositif est configuré pour recevoir, via une liaison radio, un identifiant dudit véhicule.

Selon un aspect particulier de l'invention, le signal de brouillage est émis par ledit véhicule.

Selon une variante particulière, le système de détection de brouilleurs de signaux de radionavigation par satellite selon l'invention comprend en outre un dispositif de localisation d'un véhicule émetteur du signal de brouillage par détection de la direction d'arrivée du signal de brouillage.

Selon un aspect particulier de l'invention, ladite au moins une caractéristique du signal de radionavigation par satellite est prise parmi : un rapport signal à bruit après corrélation, un niveau de puissance du signal après corrélation, une forme de la fonction de corrélation du signal.

L'invention a aussi pour objet un radar automobile comprenant un système de détection de brouilleurs de signaux de radionavigation par satellite selon l'invention.

D'autres caractéristiques et avantages de la présente invention apparaîtront mieux à la lecture de la description qui suit en relation aux dessins annexés qui représentent :
- La figure 1, un schéma d'un système de détection de brouilleurs GNSS selon l'invention,
- La figure 2, un schéma d'un système de détection de brouilleurs GNSS selon une variante de l'invention,

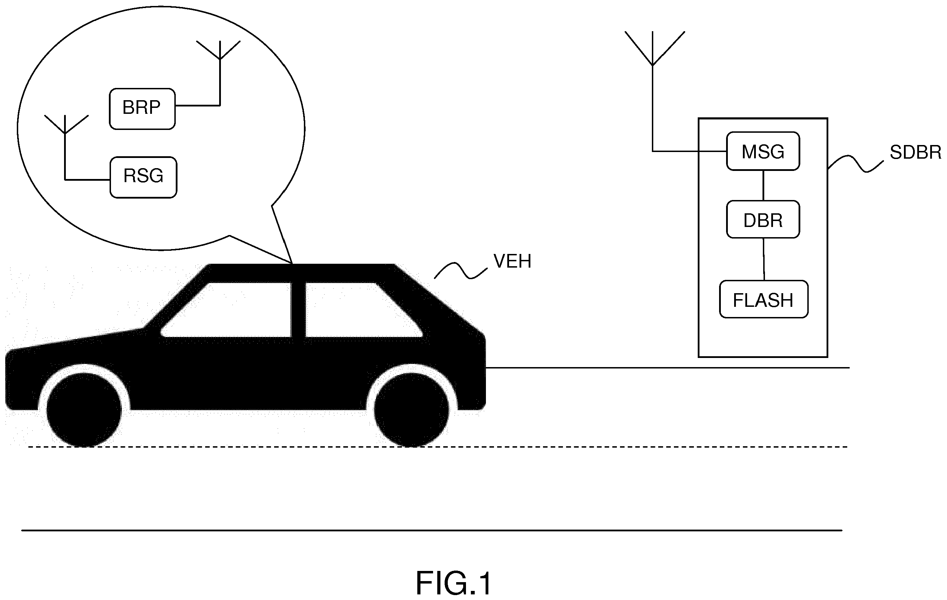

La figure 1 illustre, sur un schéma, le principe d'un système de détection de brouilleurs GNSS selon l'invention. Un véhicule VEH circulant sur une route est équipé d'un récepteur de signaux GNSS RSG, par exemple un récepteur GPS, GALILEO ou GLONASS. Le chauffeur du véhicule VEH cherche à inhiber la réception de signaux GNSS par le récepteur RSG pour ne pas être géo-localisé. A cet effet, il utilise un brouilleur personnel BRP apte à émettre un signal de brouillage qui se superpose aux signaux GNSS pour les rendre inexploitables par le récepteur RSG.

Cependant, le signal de brouillage émis par le brouilleur personnel BRP peut avoir une portée telle qu'il va perturber la réception de signaux GNSS au delà de l'environnement immédiat du véhicule.

Un objectif de l'invention est de détecter et d'identifier le véhicule VEH depuis lequel est émis le signal de brouillage. A cet effet, l'invention propose un système de détection de brouilleurs SDBR qui est disposé dans une borne positionnée à proximité d'une route, préférablement dans une zone sensible.

Le système SDBR comprend principalement un premier dispositif MSG pour recevoir des signaux GNSS, un deuxième dispositif DBR pour analyser les signaux GNSS en vue de détecter la présence d'un signal de brouillage et un troisième dispositif FLASH pour déclencher une prise de vue du véhicule VEH lorsqu'un signal de brouillage est détecté.

Le premier dispositif MSG peut être constitué par un simple dispositif de mesure de signaux GNSS qui reçoit les signaux provenant des satellites en visibilité et les retransmet au deuxième dispositif DBR pour analyse. Le premier dispositif MSG et le deuxième dispositif DBR peuvent également être co-localisés dans un seul et même dispositif de réception et d'analyse.

Le dispositif d'analyse DBR est configuré pour analyser au moins une caractéristique du signal GNSS reçu afin de détecter une perturbation de ce signal GNSS par un signal de brouillage.

Différentes méthodes peuvent être envisagées pour réaliser cette analyse.

Une première méthode possible consiste à mesurer le rapport signal à bruit du signal GNSS après corrélation. Pour rappel, un signal GNSS est modulé avec un code d'étalement de sorte que son niveau est inférieur au bruit thermique. Un récepteur GNSS réalise une corrélation du signal reçu avec une réplique locale du code d'étalement afin, notamment, d'estimer l'instant de réception du signal puis une information de position (en exploitant plusieurs signaux émis par plusieurs satellites). Le signal obtenu après corrélation doit normalement présenter un rapport signal à bruit élevé. Hors si ce signal a été perturbé par un signal de brouillage, le rapport signal à bruit après corrélation sera significativement plus faible que son niveau attendu. Ainsi, en comparant le rapport signal à bruit après corrélation à un seuil de détection prédéterminé, il est possible de détecter un évènement anormal qui peut être lié à la présence d'un signal de brouillage.

Une autre méthode possible consiste à analyser la puissance du signal reçu et en particulier ses variations. Cela peut être réalisé par un dispositif de contrôle automatique de gain. Une variation inhabituelle du niveau du signal peut signaler la présence d'un brouilleur.

Enfin, on connait plusieurs méthodes de détection d'un signal de brouillage basée sur une analyse de la forme de la fonction de corrélation du signal. La fonction de corrélation est obtenue en réalisant plusieurs corrélations du signal avec le code d'étalement local décalé de différents retards. Ces méthodes sont décrites dans les demandes de brevet français déposées par le Demandeur et publiées sous les numéros FR 3012620, FR 3012621, FR 3012622.

La fonction de corrélation peut être calculée pour plusieurs points de corrélation correspondants à des retards différents entre le signal reçu et le code d'étalement local. Par exemple, on peut considérer trois points de corrélation différents. Le premier point correspond à une corrélation du signal en phase avec le code d'étalement local, autrement dit qui donne la valeur maximale possible de la corrélation. Le deuxième point correspond à une corrélation du signal avec le code d'étalement local avancé d'un décalage temporel τ et le troisième point correspond à une corrélation du signal avec le code d'étalement local retardé d'un décalage temporel τ. Ces trois points de corrélation sont typiquement utilisés dans un récepteur de signaux de radio-navigation par satellite pour estimer le décalage temporel entre le signal reçu et l'horloge associé au code généré localement. Les décalages temporels avance et retard sont inférieurs à la durée d'un chip du code d'étalement.

En l'absence d'interférence, la forme de la fonction de corrélation correspond sensiblement à un triangle isocèle en fonction du décalage temporel (avance ou retard) entre le code local et le signal reçu. Par contre, en présence d'un signal de brouillage, cette forme est sensiblement modifiée.

La méthode proposée dans la demande de brevet FR 3012620 consiste à estimer la pente de la fonction de corrélation (sur l'un des cotés du triangle isocèle) puis à comparer la valeur de cette pente à un seuil de détection configuré en fonction d'un rapport signal à bruit cible.

La méthode proposée dans la demande de brevet FR 3012621 utilise comme critère de présence d'un signal de brouillage, une information d'intercorrélation entre une première mesure de corrélation réalisée pour un décalage « avance » et une seconde mesure de corrélation réalisée pour un décalage « retard », les deux décalages étant symétriques par rapport à l'abscisse temporelle du maximum de la fonction de corrélation. L'information d'intercorrélation est également comparée à un seuil de détection prédéterminé pour identifier la présence d'un signal de brouillage.

Enfin, la demande de brevet FR 3012622 propose une méthode basée sur l'exploitation de plusieurs différences de phase entre deux corrélations réalisées à deux positions temporelles successives. L'écart type de toutes les différences de phase est ensuite calculé et comparé à un seuil de détection. En présence d'un signal de brouillage, cet écart type est faible car la phase du signal de brouillage évolue linéairement avec le retard. En revanche, en l'absence d'interférence, cet écart type est élevé car la phase suit une répartition aléatoire.

Le dispositif d'analyse DBR peut réaliser une ou plusieurs des méthodes décrites ci-dessus. L'utilisation de plusieurs méthodes de détection permet de lever les ambigüités éventuelles liées au fait que d'autres sources interférentes (qui ne sont pas des brouilleurs) peuvent éventuellement perturber la réception de signaux GNSS.

Sans sortir du cadre de l'invention, toute autre méthode permettant de détecter la présence d'un signal de brouillage en analysant une ou plusieurs caractéristiques du signal GNSS reçu, peut être envisagée en remplacement d'une ou plusieurs méthodes décrites ci-dessus.

Lorsque le dispositif DBR détecte la présence d'un brouilleur, il commande immédiatement le dispositif de prise de vue FLASH pour que celui-ci déclenche une prise de vue du véhicule VEH. Le dispositif de prise de vue FLASH peut comprendre une caméra couplée à un flash qui illumine la route pour garantir un éclairage correct du véhicule VEH.

Dans une variante de réalisation de l'invention, le système SDBR peut également comprendre un dispositif de localisation du véhicule VEH émetteur du signal de brouillage, par détermination de la direction d'arrivée du signal de brouillage. Un tel dispositif peut, par exemple, comprendre une antenne de type CRPA (Controlled Reception Pattern Array).

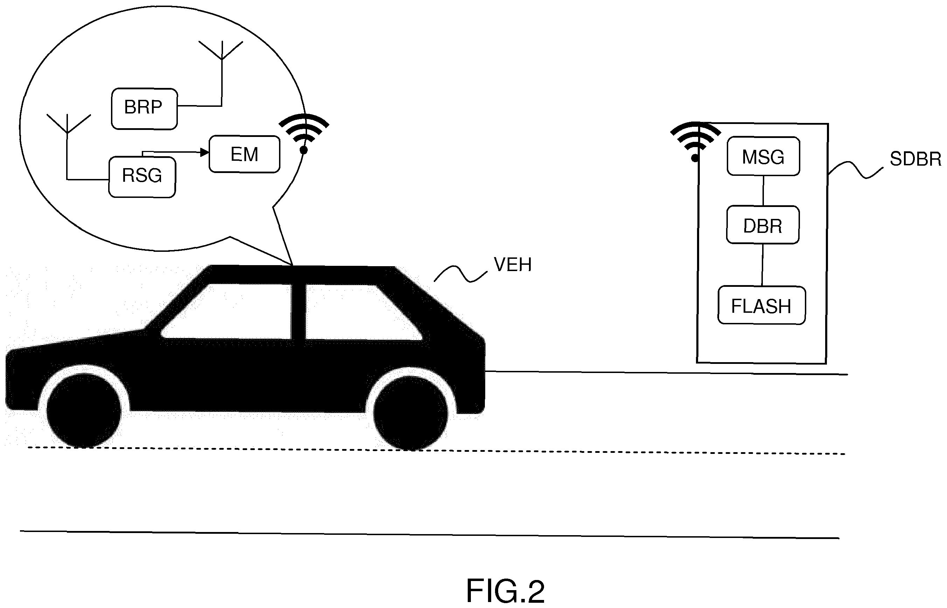

La figure 2 schématise une variante de réalisation de l'invention. Selon cette variante, le récepteur de signaux GNSS RSG à bord du véhicule VEH est modifié pour retransmettre les signaux GNSS reçus vers la borne comprenant le système SDBR selon l'invention. A cet effet, le récepteur RSG comprend ou est couplé avec un émetteur EM radio.

Le système de détection de signaux de brouillage SDBR est également modifié en ce que le dispositif de mesure de signaux GNSS MSG comporte un récepteur radio pour recevoir les signaux radiofréquences RF de sortie d'antenne en provenance du véhicule VEH. Avantageusement, le signal émis par l'émetteur EM comporte également un identifiant du véhicule VEH.

Le dispositif de détection de signaux de brouillage DBR réalise ensuite une analyse des signaux en provenance du véhicule VEH. Un avantage de cette variante est qu'elle permet d'identifier précisément le véhicule émetteur du signal de brouillage de par l'analyse de l'identifiant transmis. En effet, cette variante de l'invention permet d'analyser, depuis une station déportée, les signaux GNSS reçus directement par un véhicule et retransmis par le véhicule vers la station. Cette approche permet de s'assurer de l'état réel du brouillage à proximité du véhicule et non de la station. Les sources de brouillage embarquées au sein d'un véhicule étant en général de faible puissance, l'invention permet ainsi de contrôler d'éventuelles tentatives de brouillage embarqué au sein du véhicule.

En outre, les signaux GNSS retransmis par le récepteur RSG en sortie d'antenne peuvent être des signaux de type PRS Galileo qui sont naturellement plus robustes au brouillage ou au leurrage que des signaux GNSS standards de type C/A GPS ou OS Galileo. L'authentification des signaux PRS Galileo étant garantie par les autorités, elle opère comme un estampillage empêchant toute falsification du signal et prouvant le passage du véhicule en une position donnée et une date donnée.

Le système SDBR selon l'invention peut être directement intégré à un radar de surveillance automobile. Dans ce cas, le dispositif de prise de vue FLASH utilisé est celui déjà disponible dans le radar de surveillance automobile. Un avantage de cette solution est qu'elle ne nécessite pas de déployer une nouvelle infrastructure et permet d'utiliser les bornes radar déjà déployées sur un territoire afin de les compléter avec la nouvelle fonctionnalité proposée par l'invention.

Dans les différentes variantes de réalisation du système SBDR selon l'invention, les différents composants du système peuvent être agencés selon différentes architectures, en particulier plusieurs composants peuvent être regroupés en un seul dispositif.

Chacun des dispositifs que comporte le système selon l'invention peut être réalisé sous forme logicielle et/ou matérielle. Chaque dispositif peut notamment consister en un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

## Revendications

1. Système (SDBR) de détection de brouilleurs de signaux de radionavigation par satellite, destiné à être positionné au bord d'une route, le système comprenant :
- un premier dispositif (MSG) configuré pour recevoir, via une liaison radio, une séquence d'un signal de radionavigation par satellite reçu par un véhicule (VEH) et retransmise par ledit véhicule (VEH) vers le système (SBDR) via la liaison radio,
- un deuxième dispositif (DBR) configuré pour mesurer au moins une caractéristique dudit signal de radionavigation par satellite reçu et détecter, à partir de ladite au moins une caractéristique, une perturbation dudit signal de radionavigation par satellite par un signal de brouillage,
- un troisième dispositif (FLASH) de déclenchement d'une prise de vue de la route si ledit signal de radionavigation par satellite est perturbé par un signal de brouillage.

2. Système de détection de brouilleurs de signaux de radionavigation par satellite selon la revendication 1 dans lequel la séquence d'un signal de radionavigation par satellite est prise en sortie d'antenne d'un récepteur de radionavigation par satellite embarqué dans le véhicule (VEH).

3. Système de détection de brouilleurs de signaux de radionavigation par satellite selon l'une des revendications 1 ou 2 dans lequel le premier dispositif (MSG) est configuré pour recevoir, via une liaison radio, un identifiant dudit véhicule (VEH).

4. Système de détection de brouilleurs de signaux de radionavigation par satellite selon la revendication 1 comprenant en outre un dispositif de localisation d'un véhicule (VEH) émetteur du signal de brouillage par détection de la direction d'arrivée du signal de brouillage.

5. Système de détection de brouilleurs de signaux de radionavigation par satellite selon l'une des revendications précédentes dans lequel ladite au moins une caractéristique du signal de radionavigation par satellite est prise parmi : un rapport signal à bruit après corrélation, un niveau de puissance du signal après corrélation, une forme de la fonction de corrélation du signal.

6. Radar automobile comprenant un système de détection de brouilleurs de signaux de radionavigation par satellite (SDBR) selon l'une des revendications précédentes.

## Patentansprüche

1. System (SDBR) zur Erkennung von Störsendern von Satellitenfunknavigationssignalen, welches dazu bestimmt ist, am Rand einer Straße positioniert zu werden, wobei das System Folgendes beinhaltet:
- eine erste Vorrichtung (MSG), welche konfiguriert ist, um über eine Funkverbindung eine Sequenz aus einem von einem Fahrzeug (VEH) empfangenen und durch das Fahrzeug (VEH) an das System (SBDR) über die Funkverbindung weiter übertragenen Satellitenfunknavigationssignal zu empfangen,
- eine zweite Vorrichtung (DBR), welche konfiguriert ist, um mindestens ein Merkmal des empfangenen Satellitenfunknavigationssignals zu messen und anhand des mindestens einen Merkmals eine Störung des Satellitenfunknavigationssignals durch ein Störsignal zu erkennen,
- eine dritte Vorrichtung (FLASH) zum Auslösen einer Bildaufnahme der Straße, wenn das Satellitenfunknavigationssignal durch ein Störsignal gestört wird.

2. System zur Erkennung von Störsendern von Satellitenfunknavigationssignalen nach Anspruch 1, bei welchem die Sequenz eines Satellitenfunknavigationssignals am Antennenausgang eines in einem an Bord des Fahrzeugs (VEH) mitgeführten Satellitenfunknavigationsempfängers abgenommen wird.

3. System zur Erkennung von Störsendern von Satellitenfunknavigationssignalen nach einem der Ansprüche 1 oder 2, bei welchem die erste Vorrichtung (MSG) konfiguriert ist, um über eine Funkverbindung eine Kennung des Fahrzeugs (VEH) zu empfangen.

4. System zur Erkennung von Störsendern von Satellitenfunknavigationssignalen nach Anspruch 1, zudem beinhaltend eine Vorrichtung zur Lokalisierung eines Fahrzeugs (VEH) welches das Störsignal aussendet, durch Erkennung der Ankunftsrichtung des Störsignals.

5. System zur Erkennung von Störsendern von Satellitenfunknavigationssignalen nach einem der vorhergehenden Ansprüche, bei welchem das mindestens eine Merkmal des Satellitenfunknavigationssignals gewählt ist aus: einem Signal-zu-Rauschen-Verhältnis nach Korrelation, einem Leistungspegel des Signals nach Korrelation, einer Form der Korrelationsfunktion des Signals

6. Kraftfahrzeugradar, beinhaltend ein System zur Erkennung von Störsendern von Satellitenfunknavigationssignalen (SDBR) nach einem der vorhergehenden Ansprüche.

## Claims

1. System (SDBR) for the detection of satellite radio navigation signal jammers, intended to be positioned at the edge of a road, the system comprising:
- a first device (MSG) configured to receive, via a radio link, a sequence of a satellite navigation signal received by a vehicle (VEH) and retransmitted by said vehicle (VEH) to the system (SBDR) via the radio link ,
- a second device (DBR) configured to measure at least a characteristic of said satellite radio navigation signal received and to detect, from said at least one characteristic, a disturbance of said satellite radio navigation signal by a jamming signal,
- a third device (FLASH) for triggering a capture of view of the road if said satellite navigation signal is disturbed by a jamming signal.

2. System for detecting radio navigation signal jammers by satellite according to claim 1, wherein the sequence of a satellite radio navigation signal is taken at the output of the antenna of a satellite radio navigation receiver embarked in the vehicle (VEH).

3. System for detecting radio navigation signal jammers by satellite according to one of claims 1 or 2, wherein the first device (MSG) is configured to receive, via a radio link, an identifier of said vehicle (VEH).

4. System for detecting radio navigation signal jammers by satellite according to claim 1 further comprising a vehicle location device (VEH) transmitting the jamming signal by detecting the direction of arrival of the jamming signal.

5. System for detecting radio navigation signal jammers by satellite according to one of the preceding claims, wherein said at least one characteristic of the satellite radio navigation signal is taken from: a signal-to-noise ratio after correlation, a level of signal power after correlation, a form of the signal correlation function.

6. Automotive radar comprising a system for detecting jammers of satellite radio navigation signals (SDBR) according to one of the preceding claims.
